# EUROPÄISCHE PATENTSCHRIFT

(11) **EP 1 125 789 B1**
(45) Veröffentlichungstag und Bekanntmachung des Hinweises auf die Patenterteilung: **13.10.2004**
(21) Anmeldenummer: 01102133.4
(22) Anmeldetag: 01.02.2001
(51) Int. Cl.: B60N 3/02

(54) **Adapter für einen Dachhaltegriff eines Kfz**
Adapter for a roof assist grip of an automotive vehicles
Adaptateur pour poignée de maintien fixée au toit d'un véhicule automobile

(30) Priorität: 18.02.2000 DE 10007361
(43) Veröffentlichungstag der Anmeldung: 22.08.2001
(73) Patentinhaber: Volkswagen Aktiengesellschaft, 38436 Wolfsburg (DE)
(72) Erfinder: Welsch, Frank, Dr., 38179 Schwülper (DE); Schulze, Hilmar, 39365 Marienborn (DE)

(56) Entgegenhaltungen:
- EP-A- 0 769 415
- EP-A- 0 852 191
- DE-A- 19 638 007
- DE-A- 19 747 704
- DE-U- 29 819 392

## Beschreibung

Die vorliegende Erfindung betrifft ganz allgemein einen Adapter für einen Dachhaltegriff eines Kfz, und betrifft insbesondere einen Adapter gemäß dem Oberbegriff des Patentanspruches 1.

Unterschiedliche Dachhaltegriffe für Kraftfahrzeuge (Kfz) sind allgemein bekannt. Beim Ein- und Aussteigen werden diese Dachhaltegriffe benutzt, um sich daran festzuhalten. Zum einen müssen die Dachhaltegriffe entsprechende Kräfte aufnehmen können, so daß sich auch schwere Personen daran festhalten können; zum anderen sollte im Falle eines Unfalls eine Verletzung eines Insassen des Kfz, insbesondere im Kopfbereich, durch den Dachhaltegriff ausgeschlossen sein.

Aus der DE 197 47 704 A1 ist zum Beispiel eine Griffeinrichtung für den Innenraum eines Kfz bekannt. Diese bekannte Griffeinrichtung ist mittels einer Trageinrichtung an einer Karosserie des Kfz befestigt, wobei zwischen dem eigentlichen Griff und der Karosserie ein Verformungselement vorgesehen ist. Wird auf den Griff eine Kraft ausgeübt, wie beispielsweise durch einen auftreffenden Kopf eines Insassen des Kfz bei einem Crash, so kann sich dieses Verformungselement verformen und die Verletzungsgefahr für den Insassen reduzieren.

Die aus dem Stand der Technik bekannte Griffeinrichtung weist jedoch den Nachteil auf, daß die Festigkeit des Verformungselements insgesamt relativ hoch gewählt werden muß, da ansonsten auch bei einer normalen Benutzung der Griffeinrichtung bereits eine bleibende Deformation des Verformungselements auftreten würde. Dies wird durch die Konstruktion der Griffeinrichtung an sich bewirkt, die bei einer normalen Benutzung über die Hebelwirkung einer Trageinrichtung des Griffs eine hohe Kraft auf das Verformungselement ausübt.

Zudem ist der Verformungsweg bei dieser Griffeinrichtung konstruktiv stark begrenzt.

Des weiteren ist aus der DE 196 38 007 A1 eine Griffeinrichtung (Dachhaltegriff) für den Innenraum von Fahrzeugen bekannt, die an einer an der Fahrzeugkarosserie abgestützten Lagereinheit (Adapter) gelagert ist, die aus einem Lagerbock für die Griffeinrichtung und einem Verformungselement besteht. Der Dachhaltegriff ist dabei im Abstand von der Fahrzeugkarosserie an dem Adapter abgestützt. Das diesen mitbildende Verformungselement ist ein plastisches, kaskädenförmig ausgebildetes Element, vorzugsweise aus Kunststoff, das sich gegen die Fahrzeugkarosserie und den Lagerbock abstützt. Im Falle eines Aufpralls auf den Dachhaltegriff prallt der stabile, unverformte Lagerbock gegen dieses Verformungselement, das dadurch energieaufnehmend zerstört wird, wobei die Abstützung für den Dachhaltegriff auf die Karosserie zu verschoben wird. Die Griffeinrichtung ist aufwändig.

Gegenstand der EP 0 852 191 A1 ist ein Adapter für einen Dachhaltegriff eines Kraftfahrzeugs, der aus einer an der Fahrzeugkarosserie befestigten Trageinrichtung, an der der Dachhaltegriff im Abstand von der Fahrzeugkarosserie abgestützt ist und die Abstützung bei einem Aufprall vom Fahrzeuginnenraum her zur Fahrzeugkarosserie zu nachgiebig ausgebildet ist, besteht. Dabei ist die Trageinrichtung als starres, biegbares und brückenartig gestaltetes Deformationselement mit langgestreckten, an der Fahrzeugkarosserie befestigten Endstücken und einem zwischen diesen und im Abstand von der Fahrzeugkarosserie angeordneten, deformierbaren Bereich ausgebildet, an dem der Dachhaltegriff abgestützt ist. Der Adapter ist ebenfalls relativ aufwändig.

Es ist Aufgabe der vorliegenden Erfindung, einen Adapter für einen Dachhaltegriff eines Fahrzeugs nach dem Oberbegriff des Anspruchs 1 zu vereinfachen und dabei zu bewirken, dass bei Sicherstellung einer hohen Stabilität des Dachhaltegriffs die Verletzungsgefahr für einen Insassen minimiert ist.

Diese Aufgabe wird durch einen Adapter nach dem Oberbegriff des Anspruchs 1 durch dessen kennzeichnende Merkmale gelöst. Vorteilhafte Ausgestaltungen und Weiterbildungen sind in den nachfolgenden Unteransprüchen aufgeführt.

Die Erfindung besteht darin, dass ein Adapter für den Dachhaltegriff eines Kfz, der in bekannter Weise zugleich eine an der Karosserie des Kfz befestigte Trageinrichtung für den Dachhaltegriff darstellt, an der dieser im Abstand von der Karosserie abgestützt ist, wobei die Trageinrichtung ein starres, biegbares Deformationselement ist und die Abstützung bei einem Aufprall vom Fahrzeuginnenraum her in Richtung auf die Karosserie zu nachgiebig ausgebildet ist, vorschlagsgemäß derart gestaltet ist, dass die Trageinrichtung ein im wesentliches U-förmiges Element ist, an dessen freiem Schenkel der Dachhaltegriff abgestützt ist.

Mit dieser Anordnung lässt sich auf einfache Weise und mit minimiertem Aufwand zum einen die für eine normale Benutzung des Haltegriffsunerlässliche hohe Stabilität des Dachhaltegriffs, und zum anderen eine Nachgiebigkeit erreichen, die im Falle eines Unfalls die Verletzungsgefahr für den Insassen erheblich reduziert.

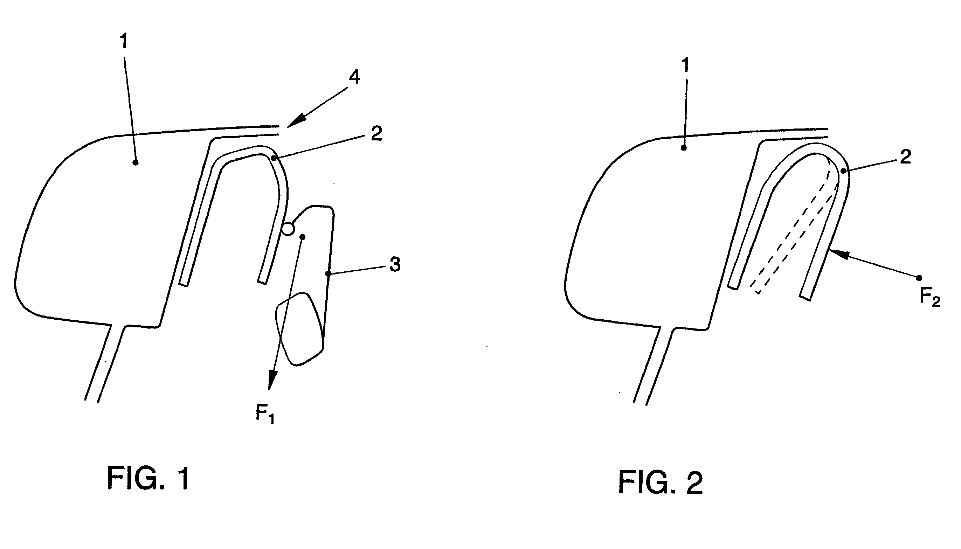

Die vorliegende Erfindung wird im folgenden anhand einer bevorzugten Ausführungsform erläutert werden, wobei in den Figuren 1 und 2 schematisch der erfindungsgemäße Adapter im Querschnitt dargestellt ist.

In der Figur 1 ist der Adapter für einen Dachhaltegriff 3 im Querschnitt gezeigt, wobei an einer Karosserie 1, insbesondere einem Abschnitt eines Dachrahmens der Karosserie 1, eine Trageinrichtung 2 befestigt ist.

Die U-förmig ausgebildete Trageinrichtung ist in einer bevorzugten Ausführungsform derart angeordnet, dass die Öffnung der U-Form nach unten zeigt. Die Befestigung der Trageinrichtung 2 kann an einem Verbindungsabschnitt 4 zwischen den beiden Schenkeln der U-Form erfolgen oder kann an dem Schenkel der U-Form erfolgen, der der Karosserie 1 benachbart ist.

Der Dachhaltegriff 3 ist an dem Schenkel der U-Form befestigt, der dem Innenraum des Kfz zugewandt ist. Nach der bevorzugten Ausführungsform ist die Trageinrichtung 2 aus einem Metall oder aus einer Metallegierung hergestellt und weist eine bestimmte Elastizität auf.

Wird der Dachhaltegriff 3 unter normalen Umständen von einem Insassen des Kfz benutzt, so greift eine Zugkraft F1 an dem Dachhaltegriff 3 an, wie es in der Figur 1 dargestellt ist. Infolge der Stabilität der U-förmigen Trageinrichtung 2 in Richtung der Kraft F1 kommt es nur zu ganz unwesentlichen Verformungen an der Trageinrichtung 2, die sich im elastischen Bereich abspielen.

In der Figur 2 ist der Zustand dargestellt, wie er sich bei einem Unfall einstellt. Wird eine Druckkraft F2 über beispielsweise einen auftreffenden Kopf eines Insassen erzeugt, so kann sich die Trageinrichtung 2 infolge der U-Form in einem weiten Bereich verformen und somit die Verletzungsgefahr deutlich reduzieren. Dieser Bereich liegt bevorzugt zwischen 10 mm und 40 mm.

Kurz zusammengefaßt, weist ein erfindungsgemäßer Adapter für einen Dachhaltegriff 3 eines Kfz eine Trageinrichtung 2 auf, an der der Dachhaltegriff 3 abgestützt ist, wobei diese Trageinrichtung 2 an einer Karosserie 1 des Kfz befestigt ist, sowie ein Verformungselement, welches zwischen der Karosserie 1 und dem Dachhaltegriff 3 angeordnet ist, wobei die Trageinrichtung 2 selbst das Verformungselement bildet. Mit dieser Anordnung läßt sich zum einen eine hohe Stabilität des Dachhaltegriffs 3 erreichen, die für eine normale Benutzung des Dachhaltegriffs 3 unerläßlich ist, sowie zum anderen eine Nachgiebigkeit erreicht werden kann, die im Falle eines Unfalls die Verletzungsgefahr für den Insassen erheblich reduziert.

Hinsichtlich weiterer Merkmale und Vorteile der vorliegenden Erfindung wird im übrigen ausdrücklich auf die Patentansprüche und die Zeichnungen verwiesen.

### BEZUGSZEICHENLISTE

- 1: Karosserie
- 2: Trageinrichtung
- 3: Dachhaltegriff
- 4: Verbindungsabschnitt
- F₁: Zugkraft
- F₂: Druckkraft

## Patentansprüche

1. Adapter für einen Dachhaltegriff (3) eines Kfz, gebildet aus einer an der Karosserie des Kfz befestigten und als starres, biegbares Deformationselement ausgebildeten Trageinrichtung (2), an der der Dachhaltegriff (3) im Abstand von der Karosserie abgestützt ist und die Abstützung bei einem Aufprall vom Fahrzeuginnenraum her zur Karosserie zu nachgiebig ausgebildet ist, **dadurch gekennzeichnet, dass** die Trageinrichtung (2) ein im wesentlichen U-förmiges Element mit einem im Abstand von der Karosserie angeordneten Schenkel ist.

2. Adapter nach Anspruch 1, **dadurch gekennzeichnet, dass** die Trageinrichtung (2) bei Zugbeanspruchung mit einer Kraft (F1) eine vernachlässigbare Verformung zeigt, wobei diese Zugbeanspruchung im wesentlichen in Richtung des Schenkels der Trageinrichtung (2) erfolgt, an dem der Dachhaltegriff (3) befestigt ist.

3. Adapter nach Anspruch 1 oder 2, **dadurch gekennzeichnet, dass** die Trageinrichtung (2) bei einer Druckbeanspruchung mit einer Kraft (F2) eine Verformung in einem Bereich zwischen 10 mm und 40 mm zeigt, wobei diese Druckbeanspruchung im wesentlichen senkrecht zu der Richtung der Zugbeanspruchung erfolgt.

4. Adapter nach einem der Ansprüche 1 bis 3, **dadurch gekennzeichnet, dass** die Trageinrichtung (2) an einem Abschnitt eines Dachrahmens der Karosserie (1) befestigt ist.

5. Adapter nach einem der Ansprüche 1 bis 4, **dadurch gekennzeichnet, dass** die Trageinrichtung (2) aus einem Metall oder aus einer Metallegierung besteht und eine bestimmte elastische Verformung zulässt.

6. Adapter nach einem der Ansprüche 1 bis 5, **dadurch gekennzeichnet, dass** die Trageinrichtung (2) im Bereich eines Verbindungsabschnittes (4) der beiden Schenkel der U-Form an der Karosserie (1) befestigt ist.

7. Adapter nach einem der Ansprüche 1 bis 5, **dadurch gekennzeichnet, dass** Trageinrichtung (2) im Bereich eines der beiden Schenkel der U-Form an der Karosserie (1) befestigt ist.

## Claims

1. Adapter for a roof grab handle (3) of a motor vehicle, formed from a supporting device (2) which is fastened to the body of the motor vehicle, is designed as a rigid, flexible deformation element and in which the roof grab handle (3) is supported at a distance from the body, and the support is designed to yield from the vehicle interior towards the body in the event of an impact, **characterized in that** the supporting device (2) is an essentially U-shaped element with a limb arranged at a distance from the body.

2. Adapter according to Claim 1, **characterized in that** the supporting device (2) exhibits a negligible deformation under a tensile load with a force (F1), this tensile load taking place essentially in the direction of the limb of the supporting device (2) to which the roof grab handle (3) is fastened.

3. Adapter according to Claim 1 or 2, **characterized in that** the supporting device (2) exhibits a deformation in a range of between 10 mm and 40 mm under a compressive load with a force (F2), this compressive load taking place essentially perpendicularly with respect to the direction of the tensile load.

4. Adapter according to one of Claims 1 to 3, **characterized in that** the supporting device (2) is fastened to a section of a roof frame of the body (1).

5. Adapter according to one of Claims 1 to 4, **characterized in that** the supporting device (2) consists of a metal or of a metal alloy and permits a certain elastic deformation.

6. Adapter according to one of Claims 1 to 5, **characterized in that** the supporting device (2) is fastened to the body (1) in the region of a connecting section (4) of the two limbs of the U-shape.

7. Adapter according to one of Claims 1 to 5, **characterized in that** the supporting device (2) is fastened to the body (1) in the region of one of the two limbs of the U-shape.

## Revendications

1. Adaptateur pour poignée de maintien (3) fixée au toit d'un véhicule automobile constitué par un organe porteur (2) conçu en forme d'élément rigide et flexible susceptible de déformation et rattaché à la carrosserie du véhicule automobile, la poignée de maintien (3) fixée au toit prenant appui sur celui-ci à distance de la carrosserie, l'appui étant conçu pour céder lors d'un choc depuis l'habitacle du véhicule en direction de la carrosserie, **caractérisé en ce que** l'organe porteur (2) est un élément conformé sensiblement en forme de U dont l'une des branches est disposée à distance de la carrosserie.

2. Adaptateur selon la revendication 1, **caractérisé en ce que** l'organe porteur (2) se déforme de façon négligeable lorsqu'il est sollicité en traction par une force (F1), cette sollicitation en traction s'effectuant sensiblement en direction de la branche de l'organe porteur (2) à laquelle est rattachée la poignée de maintien (3) fixée au toit.

3. Adaptateur selon la revendication 1 ou 2, **caractérisé en ce que** l'organe porteur (2) subit une déformation comprise entre 10 mm et 40 mm lorsqu'il est sollicité en compression par une force (F2), cette sollicitation en compression s'effectuant sensiblement perpendiculairement à la direction de la sollicitation en traction.

4. Adaptateur selon l'une quelconque des revendications 1 à 3, **caractérisé en ce que** l'organe porteur (2) est rattachée a une partie d'un cadre du toit de la carrosserie (1).

5. Adaptateur selon l'une quelconque des revendications 1 à 4, **caractérisé en ce que** l'organe porteur (2) se compose d'un métal ou d'un alliage de métaux et est susceptible, dans une certaine mesure, de déformation élastique.

6. Adaptateur selon l'une quelconque des revendications 1 à 5, **caractérisé en ce que** l'organe porteur (2) est rattachée à la carrosserie (1) dans la région d'une partie (4) reliant les deux branches de la forme en U.

7. Adaptateur selon l'une quelconque des revendications 1 à 5, **caractérisé en ce que** l'organe porteur (2) est rattachée à la carrosserie (1) dans la région de l'une des deux branches de la forme en U.
